# EUROPÄISCHE PATENTSCHRIFT

(11) **EP 2 989 322 B1**
(45) Veröffentlichungstag und Bekanntmachung des Hinweises auf die Patenterteilung: **25.08.2021**
(21) Anmeldenummer: 14715947.9
(22) Anmeldetag: 09.04.2014
(51) Int. Cl.: F03D 7/02, F03D 7/04

(54) **WINDPARK UND VERFAHREN ZUM STEUERN EINES WINDPARKS**
WIND PARK AND METHOD FOR CONTROLLING A WIND PARK
PARC ÉOLIEN ET PROCÉDÉ DE COMMANDE D'UN PARC ÉOLIEN

(30) Priorität: 22.04.2013 DE 102013207209
(43) Veröffentlichungstag der Anmeldung: 02.03.2016
(73) Patentinhaber: Wobben Properties GmbH, 26607 Aurich (DE)
(72) Erfinder: BUSKER, Kai, 26629 Großefehn (DE); BEEKMANN, Alfred, 26639 Wiesmoor (DE)
(74) Vertreter: Eisenführ Speiser
(86) Internationale Anmeldenummer: PCT/EP2014/057141
(87) Internationale Veröffentlichungsnummer: WO 2014/173685

(56) Entgegenhaltungen:
- EP-A1- 2 599 995
- GB-A- 2 475 609
- None

## Beschreibung

Die vorliegende Erfindung betrifft einen Windpark und ein Verfahren zum Steuern eines Windparks.

Ein Windpark besteht aus einer Mehrzahl von Windenergieanlagen, welche über eine zentrale Steuereinheit (Farm Control Unit FCU) gesteuert werden können.

In der prioritätsbegründenden deutschen Patentanmeldung hat das Deutsche Patent- und Markenamt die folgenden Dokumente recherchiert: DE 10 2009 042 368 A1; GB 2 475 609 A; US 6,853,292 B1 und US 2007/0124025 A1.

Es ist eine Aufgabe der vorliegenden Erfindung, einen Windpark mit einer Mehrzahl von Windenergieanlagen und einer zentralen Steuereinheit vorzusehen, welcher verbessert auf windparkinterne Fehler reagieren kann.

Diese Aufgabe wird durch einen Windpark nach Anspruch 1 und durch ein Verfahren nach Anspruch 3 gelöst.

Somit wird ein Windpark mit einer zentralen Windparksteuereinheit, einer Mehrzahl von Windenergieanlagen und einem Datenbus zum Koppeln der zentralen Windparksteuereinheit mit der Mehrzahl der Windenergieanlagen vorgesehen. Jede der Windenergieanlagen weist eine Steuereinheit auf, welche dazu ausgestaltet ist, den Betrieb der Windenergieanlage unabhängig von der zentralen Windparksteuereinheit zu steuern, wenn ein Fehler in der zentralen Windparksteuereinheit und/oder ein Fehler auf dem Datenbus auftritt. Die Steuereinheit ist dazu ausgestaltet, die jeweiligen Windenergieanlagen nacheinander abzuschalten.

Gemäß einem Aspekt der vorliegenden Erfindung ist die Steuereinheit dazu ausgestaltet, die jeweilige Windenergieanlage nach einer für diese Windenergieanlage vorab festgelegten Zeit nach Auftreten des Fehlers abzuschalten, wenn ein Fehler auf dem Datenbus oder in der zentralen Windparksteuerung auftritt.

Die Erfindung betrifft ein Verfahren zum Steuern eines Windparks, der eine zentrale Windparksteuereinheit, eine Mehrzahl von Windenergieanlagen und einen Datenbus zum Koppeln der zentralen Windparksteuereinheit mit der Mehrzahl der Windenergieanlagen aufweist. Der Betrieb der Windenergieanlage wird mittels der Steuereinheit der Windenergieanlage unabhängig von der zentralen Windparksteuereinheit gesteuert, wenn ein Fehler in der zentralen Windparksteuereinheit und/oder ein Fehler auf dem Datenbus auftritt. Die jeweiligen Windenergieanlagen werden mittels der Steuereinheit nacheinander abgeschaltet.

Die Erfindung betrifft einen Windpark mit einer Mehrzahl von Windenergieanlagen und einer zentralen Windparksteuerung. Die zentrale Windparksteuerung ist über einen Datenbus mit den jeweiligen Windenergieanlagen verbunden und kann die jeweiligen Windenergieanlagen steuern bzw. Einfluss nehmen auf die Steuerung der Windenergieanlagen. Wenn ein Fehler in der zentralen Windparksteuereinheit auftritt und/oder wenn ein Fehler auf dem Datenbus auftritt, dann wechselt jede der Windenergieanlagen in eine Defaultbetriebsart, in welcher ein Prozedere zum Runterfahren der Windenergieanlagen gespeichert ist. Gemäß der Erfindung werden die jeweiligen Windenergieanlagen bei einem windparkinternen Fehler nicht alle gleichzeitig heruntergefahren. Vielmehr erfolgt ein kaskadiertes Herunterfahren bzw. Abschalten der Windenergieanlagen. Damit ist zwischen dem Abschalten benachbarter Windenergieanlagen ein festgelegter Zeitabstand vorhanden. Dies ist vorteilhaft, weil so eine Windenergieanlage nach der anderen abgeschaltet werden kann und nicht der gesamte Windpark auf einmal von dem Energieversorgungsnetz getrennt wird.

Wenn ein Fehler in der zentralen Windparksteuerung und/oder auf dem Datenbus vorhanden ist, dann schalten die Windenergieanlagen jeweils in eine Defaultbetriebsart. Die Logik für die Defaultbetriebsart kann in jede der Windenergieanlagen gespeichert sein. In der Defaultbetriebsart erfolgt optional keine aktive Regelung der Windenergieanlagen zum Erzeugen von elektrischer Leistung. Vielmehr erfolgt gemäß der Erfindung ein kaskadiertes Abschalten der Windenergieanlagen in dem Windpark.

Weitere Ausgestaltungen der Erfindung sind Gegenstand der Unteransprüche.

Vorteil und Ausführungsbeispiele werden nachstehend unter Bezugnahme auf die Zeichnungen näher erläutert.
- Fig. 1: zeigt eine schematische Darstellung einer Windenergieanlage gemäß der Erfindung, und
- Fig. 2: zeigt ein schematisches Blockschaltbild eines Windparks gemäß einem ersten Ausführungsbeispiel.

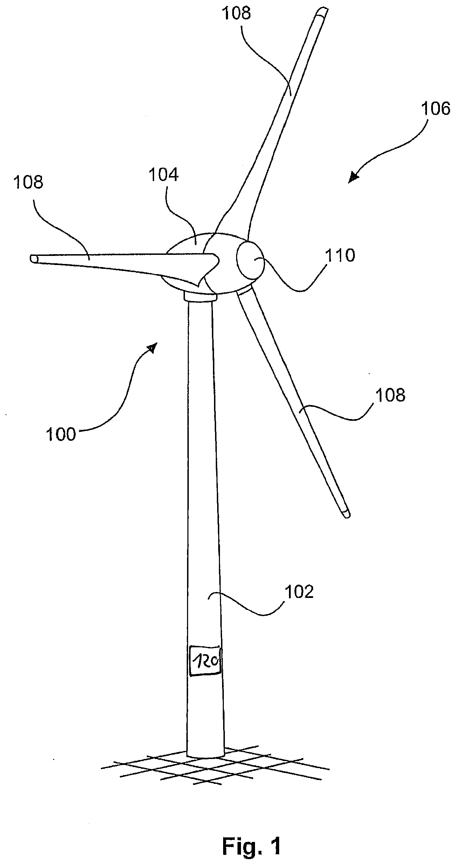

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Der Rotor 106 wird im Betrieb durch den Wind in eine Drehbewegung versetzt und hat dadurch einen elektrischen Generator in der Gondel 104. Der Pitch der Rotorblätter 108 kann durch Pitchmotoren an den Rotorblattwurzeln der jeweiligen Rotorblätter 108 verändert werden.

Die Windenergieanlage kann ferner eine Steuereinheit 120 zum Steuern des Betriebs der Windenergieanlage aufweisen. In einer Normalbetriebsart erfolgt die Steuerung der Windenergieanlage mittels der Steuereinheit 120 in Abhängigkeit des vorherrschenden Windes um elektrische Leistung zu erzeugen. Mit größer werdender Windgeschwindigkeit steigt auch die Drehzahl des Rotors 106 der Windenergieanlage und damit auch die durch den Generator erzeugte elektrische Leistung. Ab Erreichen der Nennwindgeschwindigkeit und bei steigender Windgeschwindigkeit wird der Anstellwinkel bzw. der Pitch der Rotorblätter 108 verstellt, damit die Windenergieanlage 100 nicht mehr als die Nennleistung an ein Versorgungsnetz abgibt.

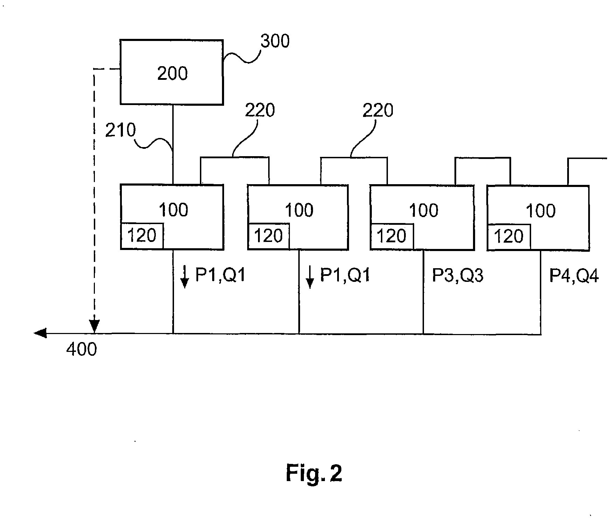

Fig. 2 zeigt eine schematische Darstellung eines Windparks gemäß einem ersten Ausführungsbeispiel. Der Windpark weist eine zentrale Windparksteuereinheit (Farm Control Unit FCU) 200 sowie eine Mehrzahl von Windenergieanlagen 100 auf. Die zentrale Windparksteuereinheit 200 kann mit einem Scadasystem 300 verbunden sein, um Daten auszutauschen. Die zentrale Windparksteuereinheit 200 ist über einen Datenbus 210, 220 mit den Windenergieanlagen 100 verbunden. Die Windenergieanlagen 100 sind entweder jeweils oder über einen zentralen Einspeisepunkt (Point of common coupling pcc) mit einem Versorgungsnetzwerk 400 verbunden und speisen jeweils eine Wirkleistung P und/oder eine Blindleistung Q in das Versorgungsnetz 400 ein.

Die zentrale Windparksteuereinheit 200 erhält Daten hinsichtlich der Netzspannung, Netzfrequenz und/oder anderer Netzwerkparameter sowie gegebenenfalls weiterer Parameter des Versorgungsnetzes 400 und steuert die Windenergieanlagen 100 entsprechend.

Falls in der zentralen Windparksteuereinheit 200 und/oder auf dem Datenbus 210, 220 ein Fehler auftritt, dann sind die Windenergieanlagen 100 dazu ausgestaltet, die Normalbetriebsart zu verlassen und in eine Defaultbetriebsart oder Fehlerbetriebsart umzuschalten. Die Steuerung der Windenergieanlagen 100 in einer Defaultbetriebsart oder Fehlerbetriebsart kann z.B. in der Steuereinheit 120 der Windenergieanlagen vorgesehen sein. Bei Auftreten eines Fehlers in der zentralen Windparksteuereinheit 200 und/oder auf dem Datenbus 210, 220 müssen alle Windenergieanlagen 100 in dem Windpark ausgeschaltet bzw. abgeschaltet werden. Gemäß dem ersten Ausführungsbeispiel soll dieses Abschalten aber nicht gleichzeitig sondern zeitversetzt erfolgen, damit nicht der gesamt Windpark auf einmal vom Netz genommen wird, was zu Schwankungen der Netzspannung und Netzfrequenz führen könnte.

In der Defaultbetriebsart oder Fehlerbetriebsart werden die Windenergieanlagen vom Netz genommen (dazu können die Rotorblätter so verstellt werden, dass der Rotor abgebremst wird und schließlich zum Stehen kommt) und es kann optional keine aktive Regelung der Windenergieanlagen (gemäß der Normalbetriebsart) erfolgen. Ein Parameter für die Defaultbetriebsart stellt die Zeit dar, wann jeder der Windenergieanlagen 100 abzuschalten ist. Hierbei kann jede der Windenergieanlagen 100 in dem Windpark eine Nummer aufweisen. Beispielsweise kann die Nummer der Windenergieanlage mit einer Verzögerungszeit multipliziert werden, um den jeweiligen Abschaltzeitpunkt zu bestimmen. Wenn die Verzögerungszeit beispielsweise 30 Sekunden beträgt, dann wir die erste Windenergieanlage nach 30 Sekunden abgeschaltet, die zweite Windenergieanlage wird nach 60 Sekunden abgeschaltet usw. Damit kann eine kaskadierte Abschaltung der Windenergieanlagen ermöglicht werden, so dass nicht der gesamte Windpark auf einmal abgeschaltet wird sondern die jeweiligen Windenergieanlagen nacheinander abgeschaltet werden.

Wenn in der in der zentralen Windparksteuereinheit 200 ein Fehler bzw. ein interner Fehler erfasst wird, dann kann ein entsprechendes Signal über den Datenbus 110, 120 an die jeweiligen Windenergieanlagen 100 übermittelt werden. Sobald eine Windenergieanlage 100 ein entsprechendes Signal empfängt, dann aktiviert die Steuereinheit 120 der Windenergieanlage eine Defaultbetriebsart oder Fehlerbetriebsart. Diese Defaultbetriebsart oder Voreinstellungsbetriebsart ist vorgesehen, damit die Windenergieanlage in einem Fehlerfall sicher heruntergefahren und gestoppt werden kann. In dieser Defaultbetriebsart wird die Windenenergieanlage 100 von der Steuereinheit 120 gesteuert. Die zentrale Windparksteuereinheit hat dann keinen Einfluss mehr auf die Steuerung der jeweiligen Windenergieanlagen 100.

Die Windenergieanlage 100 kann einen Fehler auf dem Datenbus 210, 220 erfassen und die Steuereinheit 120 der Windenergieanlagen 100 aktiviert dann die Defaultbetriebsart und die Windenergieanlage wird unabhängig von der zentralen Windparksteuereinheit 200 abgeschaltet bzw. herunter geregelt.

Ab Erfassen eines Fehlers in der zentralen Windparksteuereinheit 200 und/oder eines Fehlers auf dem Datenbus 210, 220 kann optional in jeder der Windenergieanlagen 100 ein Zähler anfangen zu laufen. Nach Ablauf der jeder Windenergieanlage zugeordneten Abschaltzeit wird jede die Windenergieanlagen 100 durch die Steuereinheit 120 abgeschaltet bzw. herunter gefahren.

## Patentansprüche

1. Windpark, mit
einer zentralen Windparksteuereinheit (200), die dazu ausgestaltet ist, Daten hinsichtlich einer Netzspannung, einer Netzfrequenz und/oder anderer Netzparameter eines Versorgungsnetzwerkes (400) zu empfangen,
einer Mehrzahl von Windenergieanlagen (100),
wobei die zentrale Windparksteuereinheit (200) über einen Datenbus (210, 220) mit der Mehrzahl der Windenergieanlagen (100) gekoppelt ist, und die Mehrzahl der Windenergieanlagen (100) in einer Normalbetriebsart gemäß den empfangenen Daten steuert,
wobei jede der Mehrzahl der Windenergieanlagen (100) eine Steuereinheit (120) aufweist, welche dazu ausgestaltet ist, den Betrieb der Windenergieanlage (100) unabhängig von der zentralen Windparksteuereinheit (200) in einer Fehlerbetriebsart zu steuern, wenn ein Fehler in der zentralen Windparksteuereinheit (200) und/oder ein Fehler auf dem Datenbus (210, 220) auftritt,
wobei die Steuereinheiten (120) in der Fehlerbetriebsart dazu ausgestaltet sind, die jeweiligen Windenergieanlagen (100) der Mehrzahl der Windenergieanlagen (100) nacheinander abzuschalten, wenn ein Fehler in der zentralen Windparksteuereinheit (200) und/oder ein Fehler auf dem Datenbus (210, 220) auftritt.

2. Windpark nach Anspruch 1, wobei
die Steuereinheit (120) dazu ausgestaltet ist, die jeweilige Windenergieanlage (100) nach einer für jede der Windenergieanlagen (100) vorab festgelegten Zeit nach Auftreten des Fehlers abzuschalten.

3. Verfahren zum Steuern eines Windparks, der eine zentrale Windparksteuereinheit (200) und eine Mehrzahl von Windenergieanlagen (100), welche über einen zentralen Einspeisepunkt mit einem Versorgungsnetzwerk (400) verbunden sind, aufweist, wobei die zentrale Windparksteuereinheit (200) über einen Datenbus (210, 220) mit der Mehrzahl der Windenergieanlagen (100) gekoppelt ist, wobei die zentrale Windparksteuereinheit (200) Daten hinsichtlich einer Netzspannung, einer Netzfrequenz und/oder anderer Netzparameter eines Versorgungsnetzwerkes (400) zu empfangen, mit den Schritten:
- Steuern der Mehrzahl der Windenergieanlagen (100) in einer Normalbetriebsart durch die zentrale Windparksteuereinheit (200) basierend auf den empfangenen Daten,
- Steuern der Windenergieanlagen unabhängig von der zentralen Windparksteuereinheit (200) in einer Fehlerbetriebsart, wenn ein Fehler in der zentralen Windparksteuereinheit (200) und/oder ein Fehler auf dem Datenbus (210, 220) auftritt und
- Abschalten der jeweiligen Windenergieanlagen (100) nacheinander durch die Steuereinheit (120), wenn ein Fehler in der zentralen Windparksteuereinheit (200) und/oder ein Fehler auf dem Datenbus (210, 220) auftritt.

## Claims

1. Wind farm, having
a central wind farm control unit (200) configured to receive data related to a network voltage, a network frequency and/or other network parameter of a supply network (400),
a plurality of wind energy installations (100),
wherein the central wind farm control unit (200) is coupled to the plurality of wind energy installations (100) via a data bus (210, 220) and controls the plurality of wind energy installation (100) in a normal operating mode according to the received data,
wherein each of the plurality of wind energy installations (100) has a control unit (120) which is configured to control the operation of the wind energy installation (100) independently of the central wind farm control unit (200) in a fault operating mode if a fault occurs in the central wind farm control unit (200) and/or a fault occurs on the data bus (210, 220),
wherein the control units (120) are configured in the fault operating mode to successively switch off the respective wind energy installations (100) of the plurality of wind energy installations (100) if a fault occurs in the central wind farm control unit (200) and/or a fault occurs on the data bus (210, 220).

2. Wind farm according to Claim 1, wherein
the control unit (120) is configured to switch off the respective wind energy installation (100) after a time, defined in advance for each of the wind energy installations (100) after the occurrence of the fault.

3. Method for controlling a wind farm which has a central wind farm control unit (200) and a plurality of wind energy installations (100) which are coupled via a central feed point to a supply network (400), wherein the central wind farm control unit (200) is coupled to the plurality of wind energy installations (100) via a data bus (210, 220), wherein the central wind farm control unit (200) receives data related to a network voltage, network frequency and/or other network parameter of a supply network (400) having the steps:
- controlling the plurality of wind energy installations in a normal operating mode by the central wind farm control unit (200) based on the received data,
- controlling the wind energy installations independently of the central wind farm control unit (200) in a fault operating mode if a fault occurs in the central wind farm control unit (200) and/or a fault occurs on the data bus (210, 220), and
- successively switching off the respective wind energy installations (100) by means of the control unit (120) if a fault occurs in the central wind farm control unit (200) and/or a fault occurs on the data bus (210, 220).

## Revendications

1. Parc éolien avec
une unité de commande de parc éolien centrale (200), qui est configurée pour recevoir des données concernant une tension de réseau, une fréquence de réseau et/ou d'autres paramètres de réseau d'un réseau d'alimentation (400),
une multitude d'éoliennes (100),
dans lequel l'unité de commande de parc éolien centrale (200) est couplée par l'intermédiaire d'un bus de données (210, 220) à la multitude d'éoliennes (100), et commande la multitude d'éoliennes (100) dans un mode de fonctionnement normal selon les données reçues,
dans lequel chaque éolienne de la multitude d'éoliennes (100) présente une unité de commande (120), qui est configurée pour commander le fonctionnement de l'éolienne (100) indépendamment de l'unité de commande de parc éolien centrale (200) dans un mode de fonctionnement défaillant quand une défaillance survient dans l'unité de commande de parc éolien centrale (200) et/ou une défaillance survient sur le bus de données (210, 220),
dans lequel les unités de commande (120) sont configurées dans le mode de fonctionnement défaillant pour désactiver les éoliennes (100) respectives de la multitude des éoliennes (100) les unes après les autres quand une défaillance survient dans l'unité de commande de parc éolien centrale (200) et/ou une défaillance survient sur le bus de données (210, 220).

2. Parc éolien selon la revendication 1, dans lequel
l'unité de commande (120) est configurée pour désactiver l'éolienne (100) respective après un temps fixé au préalable pour chacune des éoliennes (100) après la survenue de la défaillance.

3. Procédé pour commander un parc éolien, qui présente une unité de commande de parc éolien centrale (200) et une multitude d'éoliennes (100), lesquelles sont raccordées à un réseau d'alimentation (400) par l'intermédiaire d'un point d'injection central, dans lequel l'unité de commande de parc éolien centrale (200) est couplée à la multitude des éoliennes (100) par l'intermédiaire d'un bus de données (210, 220), dans lequel l'unité de commande de parc éolien centrale (200) est réalisée pour recevoir des données concernant une tension de réseau, une fréquence de réseau et/ou d'autres paramètres de réseau d'un réseau d'alimentation (400), avec les étapes :
- de commande de la multitude des éoliennes (100) dans un mode de fonctionnement normal par l'unité de commande de parc éolien centrale (200) sur la base des données reçues,
- de commande des éoliennes indépendamment de l'unité de commande de parc éolien centrale (200) dans un mode de fonctionnement défaillant quand une défaillance survient dans l'unité de commande de parc éolien centrale (200) et/ou une défaillance survient sur le bus de données (210, 220), et
- de désactivation des éoliennes (100) respectives les unes après les autres par l'unité de commande (120) quand une défaillance survient dans l'unité de commande de parc éolien centrale (200) et/ou une défaillance survient sur le bus de données (210, 220).
